# EUROPEAN PATENT SPECIFICATION

(11) **EP 4 617 574 B1**
(45) Date of publication and mention of the grant of the patent: **02.12.2026**
(21) Application number: 23919323.8
(22) Date of filing: 19.09.2023
(51) Int. Cl.: F24F 1/0014, F24F 1/0057, F24F 11/65, F24F 11/79, F24F 13/14, F24F 13/24

(54) **INDOOR AIR-CONDITIONING UNIT**
INNENRAUMKLIMAANLAGE
UNITÉ DE CLIMATISATION INTÉRIEURE

(30) Priority: 31.01.2023 CN 202320210813 U
(43) Date of publication of application: 17.09.2025
(73) Proprietor: Ningbo Aux Electric Co., Ltd., Ningbo, Zhejiang 315191 (CN); Aux Air Conditioner Co., Ltd, Ningbo, Zhejiang 315191 (CN)
(72) Inventor: LI, Binbin, Ningbo, Zhejiang 315191 (CN); SHANG, Bin, Ningbo, Zhejiang 315191 (CN); CHENG, Li, Ningbo, Zhejiang 315191 (CN)
(74) Representative: Gamba, Alessandro
(86) International application number: PCT/CN2023/119797
(87) International publication number: WO 2024/159759

(56) References cited:
- AU-A1- 2018 333 383
- CN-A- 106 949 615
- CN-A- 111 615 607
- CN-A- 114 076 357
- CN-A- 114 413 334
- CN-U- 207 094 791
- CN-U- 213 272 880
- CN-U- 218 884 115
- CN-U- 219 160 470
- CN-U- 219 177 824
- CN-U- 219 177 825

## Description

The present invention claims the priority to the Chinese patent application with the filing No. CN202320210813.8 filed with the Chinese Patent Office on January 31, 2023.

### Technical Field

The present invention relates to the technical field of air conditioners, in particular to an indoor unit of air conditioner (indoor air-conditioning unit).

### Background Art

At present, with the increasing improvement of living standards, people have higher and higher functional requirements for air conditioners. Currently, the air discharge mode of air conditioners is single, only capable of simply implementing heating or cooling functions, unable to meet users' special needs (such as zero-draft-sensation air discharge), with poor air-deflecting effect and poor user experience. Examples of air conditioners are disclosed in documents CN111615607A, CN114413334A and CN106949615A. For example document AU 2018 333 383 A1 discloses the features of the preamble of claim 1.

### Summary

The problem to be solved by the present invention is to implement different air discharge modes, improve the diversity of air discharge modes, meet various user needs, enhance the air-deflecting effect, and provide a good user experience.

To solve the above-mentioned problems, an air conditioner according to claim 1 is provided. The dependent claims provide preferred features of the invention. The technical solution of the present invention is implemented as follows.

The present invention provides an indoor unit of air conditioner, including a middle frame, a front panel, a mounting frame, and an air-deflecting structure, wherein the front panel is installed on an outer side of the middle frame, an airflow channel is formed between the front panel and the middle frame, the front panel is densely provided with a plurality of first overflow holes, the first overflow holes are communicated with the airflow channel, a volute air duct with an outlet is arranged in the middle frame, the outlet is configured for discharge airflow to be blown out, and the air-deflecting structure is movably installed outside the outlet; when the indoor unit of air conditioner operates in a zero-draft-sensation mode, the air-deflecting structure moves to a first position to guide the discharge airflow into the airflow channel, so that the discharge airflow is blown out through the first overflow holes; when the indoor unit of air conditioner operates in an enhanced heating mode, the air-deflecting structure moves to a second position to make the discharge airflow blow in a downward direction; when the indoor unit of air conditioner operates in a normal heating mode, the air-deflecting structure moves to a third position to make the discharge airflow blow obliquely downward in a first direction, and a first included angle is formed between the first direction and a horizontal direction; and when the indoor unit of air conditioner operates in a cooling mode, the air-deflecting structure moves to a fourth position to make the discharge airflow blow obliquely downward in a second direction, and a second included angle is formed between the second direction and the horizontal direction, wherein the first included angle is greater than the second included angle. Compared with the prior art, by adopting the airflow channel arranged between the front panel and the middle frame, and the air-deflecting structure movably installed on the mounting frame, the indoor unit of air conditioner provided by the present invention can implement different air discharge modes, improve the diversity of air discharge modes, meet various user needs, enhance the air-deflecting effect, and provide a good user experience.

Further, the ratio of the first included angle to the second included angle may range from 3 to 5. A reasonable ratio of the first included angle to the second included angle can ensure the heating effect during heating and the cooling effect during cooling, while minimizing the movement angle or stroke of the air-deflecting structure when switching modes, reducing noise, and saving energy.

Further, the ratio of the first included angle to the second included angle may be 4.

According to the invention, the indoor unit of air conditioner further includes a mounting frame detachably connected to the middle frame, and the air-deflecting structure includes a first air deflector and a second air deflector, both the first air deflector and the second air deflector are rotatably installed on the mounting frame, the first air deflector has a first rotation axis, the second air deflector has a second rotation axis, and the first rotation axis and the second rotation axis are arranged in parallel and spaced apart. The air-deflecting functions of the first and second air deflectors complement each other, further enhancing the air-deflecting effect and improving the user experience.

According to the invention, a preset included angle is formed between the direction of a connecting line of the first rotation axis and the second rotation axis and the horizontal direction, and the preset included angle ranges from 30 degrees to 40 degrees. A reasonable preset included angle can ensure that the air-deflecting directions of the first and second air deflectors are more ergonomic, enhance the air-deflecting effect, and enhance user comfort.

For example, the preset included angle is 35 degrees.

Preferably, the mounting frame is provided with a first limit table and a second limit table spaced apart. The first limit table is configured for abutting against the first air deflector when the air-deflecting structure moves to the second position, and the second limit table is configured for abutting against the second air deflector when the air-deflecting structure moves to the second position. By defining the limit positions of the first and second air deflectors, excessive rotation of the first and second air deflectors is prevented.

Preferably, the first air deflector is densely provided with a plurality of second overflow holes, and the second air deflector is densely provided with a plurality of third overflow holes, both of which are configured for blowing out discharge airflow. The outlet airflow can slowly flow out from the second overflow holes on the first air deflector and the third overflow holes on the second air deflector, so as to implement the zero-draft-sensation air discharge function of the indoor unit of air conditioner and ensure the heat exchange effect during zero-draft-sensation air discharge.

Preferably, the cross-sections of the first and second air deflectors are both arc shaped. The arc-shaped first and second air deflectors have small wind resistance and good air-deflecting effect, and both the concave surface and the convex surface of the arc-shaped plate can guide airflow, further improving the diversity of air discharge of the indoor unit of air conditioner.

Further, the air-deflecting structure may further include a first stepping motor and a second stepping motor, both installed on the middle frame. The first stepping motor is in transmission connection with the first air deflector, and the second stepping motor is in transmission connection with the second air deflector. The first stepping motor and the second stepping motor operate independently, and the actions of the first and second air deflectors do not interfere with each other, further improving the diversity of air discharge modes of the indoor unit of air conditioner.

### Brief Description of Drawings

FIG. 1 is an axonometric view of the indoor unit of air conditioner according to an embodiment of the present invention;
FIG. 2 is a cross-sectional view of the indoor unit of air conditioner according to an embodiment of the present invention;
FIG. 3 is a mathematical model diagram of the indoor unit of air conditioner according to an embodiment of the present invention;
FIG. 4 is a schematic structural diagram of the indoor unit of air conditioner in the zero-draft-sensation mode according to an embodiment of the present invention;
FIG. 5 is a schematic structural diagram of the indoor unit of air conditioner in the enhanced heating mode according to an embodiment of the present invention;
FIG. 6 is a schematic structural diagram of the indoor unit of air conditioner in the normal heating mode according to an embodiment of the present invention;
FIG. 7 is a schematic structural diagram of the indoor unit of air conditioner in the cooling mode according to an embodiment of the present invention;
FIG. 8 is a schematic structural diagram of the indoor unit of air conditioner in the constant temperature mode according to an embodiment of the present invention; and
FIG. 9 is a schematic structural diagram of the indoor unit of air conditioner in the dual-zone air supply mode according to an embodiment of the present invention.

Reference numerals:
100- Indoor unit of air conditioner; 110- Middle frame; 120- Front panel; 121- First overflow hole; 130- Mounting frame; 131- First limit table; 132-Second limit table; 140- Air-deflecting structure; 141- First air deflector; 142-Second air deflector; 143- First stepping motor; 144- Second stepping motor; 145- Second overflow hole; 146- Third overflow hole; 150- Airflow channel; 160- Volute air duct; 161- Outlet; 170- Cross-flow fan.

### Detailed Description of Embodiments

To make the above-mentioned objectives, features, and advantages of the present invention more clearly understandable, specific embodiments of the present invention will be described in detail below with reference to the accompanying drawings.

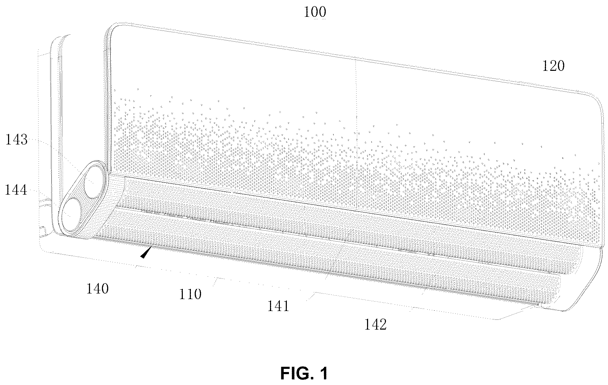

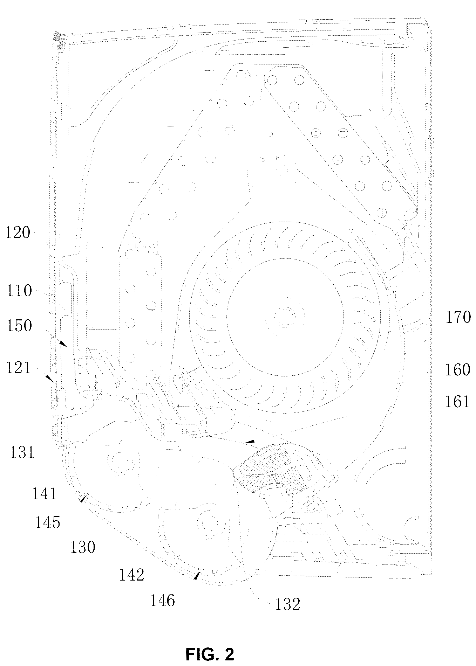

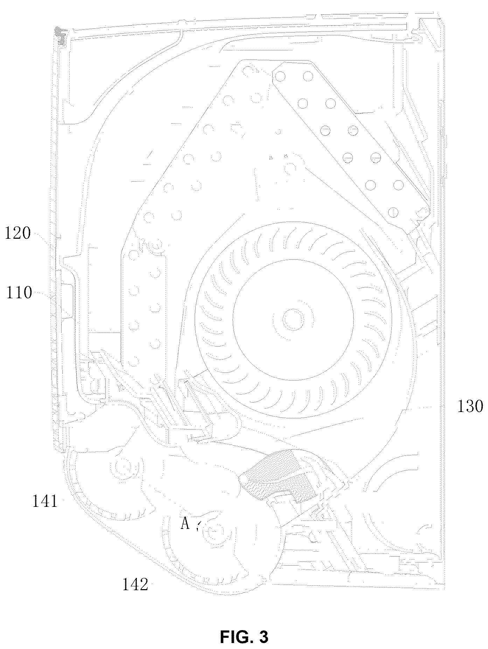

Referring to FIGS. 1 to 3, an embodiment of the present invention provides an indoor unit of air conditioner 100 for regulating indoor air temperature. It can implement different air discharge modes, improve the diversity of air discharge modes, meet various user needs, enhance the air-deflecting effect, and provide a good user experience.

It should be noted that the indoor unit of air conditioner 100 is a wall-mounted air conditioner, which is hung on an indoor wall and configured to blow hot air or cold air into the room to achieve heating or cooling functions, thereby regulating the indoor air temperature and meeting user needs.

The indoor unit of air conditioner 100 includes a middle frame 110, a front panel 120, a mounting frame 130, and an air-deflecting structure 140. The front panel 120 is installed on the outer side of the middle frame 110 and is configured to shield the middle frame 110, so as to improve the aesthetics of the entire indoor unit of air conditioner 100. An airflow channel 150 is formed between the front panel 120 and the middle frame 110, and the airflow channel 150 is configured for the inflow of discharge airflow. The front panel 120 is densely provided with a plurality of first overflow holes 121, which are communicated with the airflow channel 150. The discharge airflow in the airflow channel 150 can flow out through the plurality of first overflow holes 121 at the same time. Due to the small diameter of the first overflow holes 121, the air volume and wind speed of the discharge airflow flowing out from the first overflow holes 121 are extremely low, and the discharge airflow slowly flows out from the first overflow holes 121 on the front panel 120, so as to implement the zero-draft-sensation air discharge function of the indoor unit of air conditioner 100. A volute air duct 160 with an outlet 161 is arranged in the middle frame 110. The volute air duct 160 is configured for installing a cross-flow fan 170. The cross-flow fan 170 installed in the volute air duct 160 can generate negative pressure to drive the discharge airflow to flow along the volute air duct 160 and blow out through the outlet 161. The air-deflecting structure 140 is movably installed outside the outlet 161. Specifically, the mounting frame 130 is detachably connected to the middle frame 110, and the air-deflecting structure 140 is movably installed on the mounting frame 130. The mounting frame 130 can bear the air-deflecting structure 140, and the air-deflecting structure 140 can move relative to the mounting frame 130 to implement the air-deflecting function for the discharge airflow. Further, the indoor unit of air conditioner 100 has multiple air discharge modes. When the indoor unit of air conditioner 100 is in different air discharge modes, the air-deflecting structure 140 can change different positions to adjust the air discharge direction of the discharge airflow, so as to implement different air discharge modes, improve the diversity of air discharge modes, meet various needs of users, enhance the air-deflecting effect, and provide a good user experience.

When the indoor unit of air conditioner 100 operates in the zero-draft-sensation mode, the air-deflecting structure 140 moves to the first position to guide the discharge airflow into the airflow channel 150, so that the discharge airflow is blown out through the first overflow holes 121. When the indoor unit of air conditioner 100 operates in the enhanced heating mode, the air-deflecting structure 140 moves to the second position to make the discharge airflow blow in the downward direction. When the indoor unit of air conditioner 100 operates in the normal heating mode, the air-deflecting structure 140 moves to the third position to make the discharge airflow blow obliquely downward in the first direction, and a first included angle is formed between the first direction and the horizontal direction. When the indoor unit of air conditioner 100 operates in the cooling mode, the air-deflecting structure 140 moves to the fourth position to make the discharge airflow blow obliquely downward in the second direction, and a second included angle is formed between the second direction and the horizontal direction.

Specifically, the first included angle is greater than the second included angle, that is, the discharge airflow blown in the normal heating mode is lower than that blown in the cooling mode, so as to implement the function of rapid hot air landing, improve heating efficiency, and enhance the heating effect. Further, the ratio of the first included angle to the second included angle may range from 3 to 5. A reasonable ratio of the first included angle to the second included angle can ensure the heating effect during heating and the cooling effect during cooling, while minimizing the movement angle or stroke of the air-deflecting structure 140 when switching modes, reducing noise, and saving energy.

In this embodiment, the ratio of the first included angle to the second included angle is 4, but it is not limited thereto. In other embodiments, the ratio of the first included angle to the second included angle may be 3 or 5, and the specific value of the ratio of the first included angle to the second included angle is not limited.

It should be noted that the air-deflecting structure 140 includes a first air deflector 141, a second air deflector 142, a first stepping motor 143, and a second stepping motor 144. Both the first air deflector 141 and the second air deflector 142 are rotatably installed on the mounting frame 130. The mounting frame 130 can bear the first air deflector 141 and the second air deflector 142, and the first air deflector 141 and the second air deflector 142 can rotate relative to the mounting frame 130 to implement the air-deflecting function for the discharge airflow. Specifically, the first air deflector 141 has a first rotation axis, and the first air deflector 141 can rotate around the first rotation axis. The second air deflector 142 has a second rotation axis, and the second air deflector 142 can rotate around the second rotation axis. The first rotation axis and the second rotation axis are arranged in parallel and spaced apart, so that the air-deflecting functions of the first air deflector 141 and the second air deflector 142 complement each other, further enhancing the air-deflecting effect and improving the user experience.

In this embodiment, both the first stepping motor 143 and the second stepping motor 144 are installed on the middle frame 110. The first stepping motor 143 is in transmission connection with the first air deflector 141 and is configured to drive the first air deflector 141 to rotate. The second stepping motor 144 is in transmission connection with the second air deflector 142 and is configured to drive the second air deflector 142 to rotate. Specifically, the first stepping motor 143 and the second stepping motor 144 operate independently, that is, the actions of the first air deflector 141 and the second air deflector 142 do not interfere with each other. Users may operate only the first air deflector 141 without operating the second air deflector 142, or only the second air deflector 142 without operating the first air deflector 141, so as to further improve the diversity of air discharge modes of the indoor unit of air conditioner 100.

According to the invention a preset included angle is formed between the direction of a connecting line of the first rotation axis and the second rotation axis and the horizontal direction, and the preset included angle ranges from 30 degrees to 40 degrees. A reasonable preset included angle can ensure that the air-deflecting directions of the first air deflector 141 and the second air deflector 142 are more ergonomic, enhance the air-deflecting effect, and enhance user comfort. For ease of understanding, the preset angle is denoted as A.

In one embodiment, the preset included angle is 35 degrees. In other embodiments, the preset included angle may be 30 degrees or 40 degrees.

In this embodiment, the mounting frame 130 is provided with a first limit table 131 and a second limit table 132 spaced apart. The first limit table 131 is configured to abut against the first air deflector 141 when the air-deflecting structure 140 moves to the second position, so as to define the left limit position of the first air deflector 141 and prevent excessive rotation of the first air deflector 141. The second limit table 132 is configured to abut against the second air deflector 142 when the air-deflecting structure 140 moves to the second position, so as to define the left limit position of the second air deflector 142 and prevent excessive rotation of the second air deflector 142.

In this embodiment, the first air deflector 141 is densely provided with a plurality of second overflow holes 145, and the second air deflector 142 is densely provided with a plurality of third overflow holes 146. Both the second overflow holes 145 and the third overflow holes 146 are configured for the discharge airflow to be blown out. When the indoor unit of air conditioner 100 operates in the zero-draft-sensation air discharge state, the discharge airflow can flow out through the plurality of second overflow holes 145 and the plurality of third overflow holes 146 at the same time. Due to the small diameters of the second overflow holes 145 and the third overflow holes 146, the air volume and wind speed of the discharge airflow flowing out from the second overflow holes 145 and the third overflow holes 146 are extremely low, and the discharge airflow slowly flows out from the second overflow holes 145 on the first air deflector 141 and the third overflow holes 146 on the second air deflector 142, so as to implement the zero-draft-sensation air discharge function of the indoor unit of air conditioner 100, while ensuring the heat exchange effect during zero-draft-sensation air discharge.

Further, the cross sections of both the first air deflector 141 and the second air deflector 142 are arc shaped. The arc-shaped first air deflector 141 and second air deflector 142 have small wind resistance and good air-deflecting effects, and both the concave surface and the convex surface of the arc-shaped plate can guide air, so as to further improve the diversity of air discharge of the indoor unit of air conditioner 100.

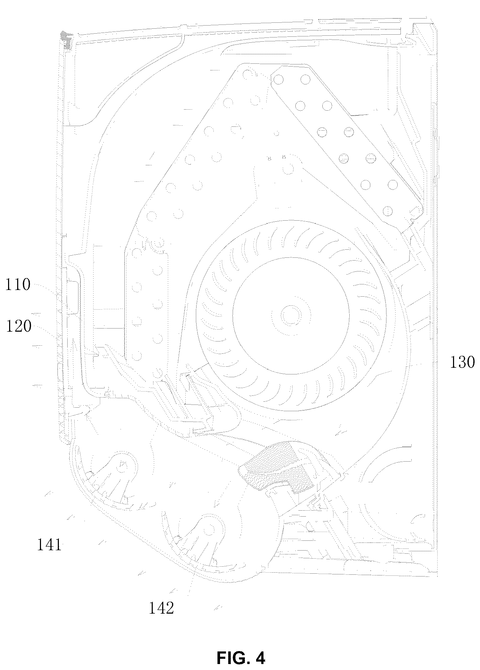

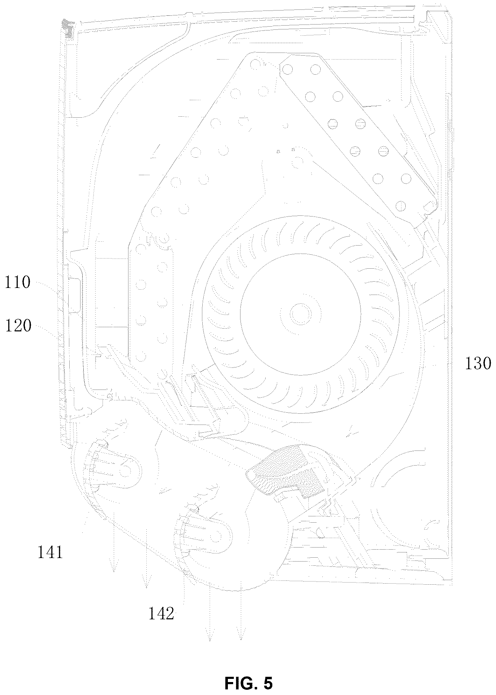

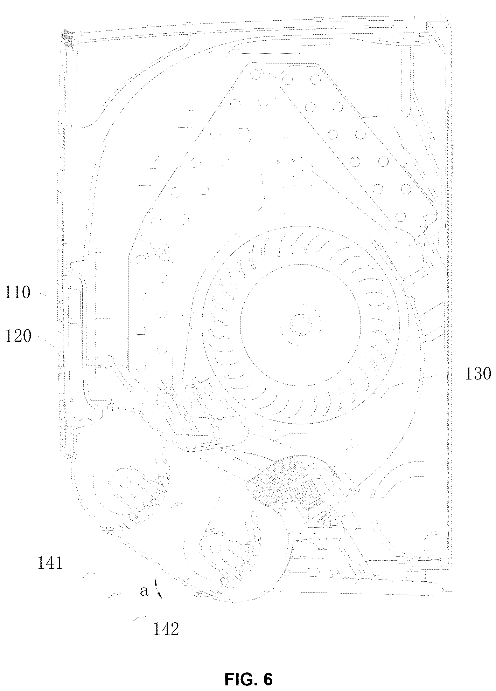

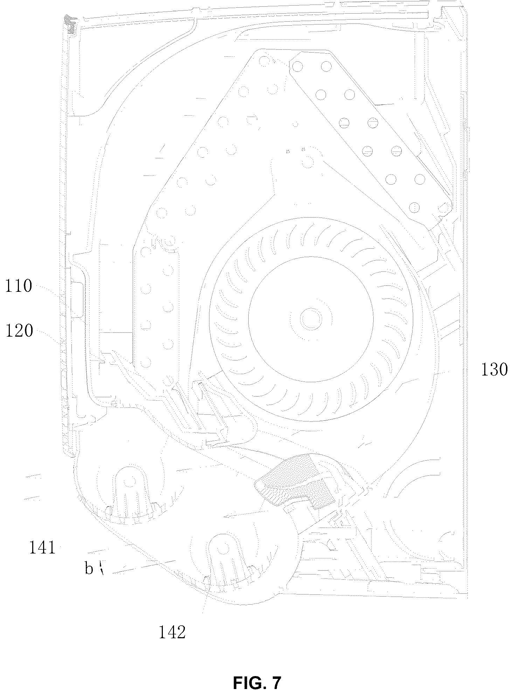

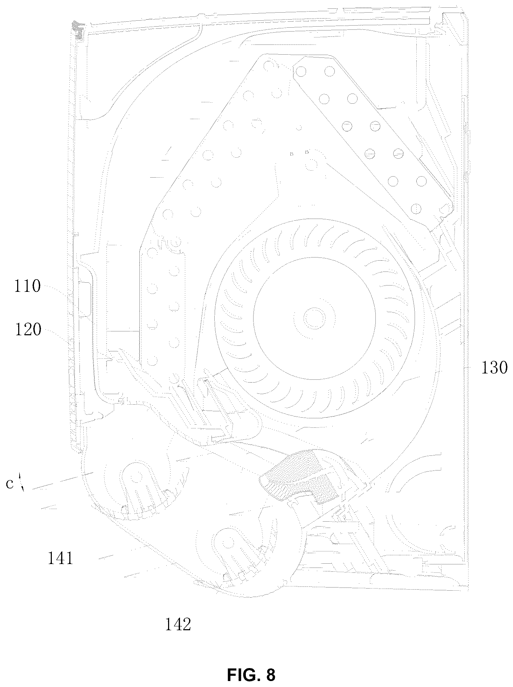

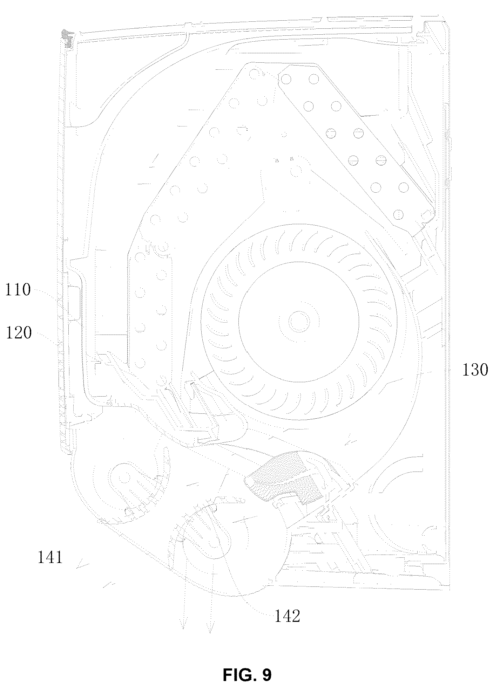

Referring to FIGS. 4 to 9 (the line arrows in FIGS. 4 to 9 indicate the airflow direction), it is worth noting that the indoor unit of air conditioner 100 has six modes, namely, the zero-draft-sensation mode, the enhanced heating mode, the normal heating mode, the cooling mode, the constant temperature mode, and the dual-zone air supply mode. The zero-draft-sensation mode has extremely low air discharge volume and air speed, and users basically cannot feel the direct blowing of the discharge airflow, and the comfort level is enhanced. This mode can both heat and cool, and is suitable for scenarios where users are sleeping or working. The enhanced heating mode has high air discharge volume and air speed, and the discharge airflow is blown downward to the ground, and then diffuses from the ground to the surroundings and upward to quickly achieve the heating function, which is suitable for scenarios where the indoor temperature is extremely low and needs to be heated up urgently. The normal heating mode has high air discharge volume and air speed, and the discharge airflow is blown obliquely downward in the first direction, with heat continuously diffusing downward to achieve the heating maintenance function, which is suitable for scenarios where the indoor temperature needs to be maintained after rising to a certain level. The cooling mode has high air discharge volume and air speed, and the discharge airflow is blown obliquely downward in the second direction, with cooling capacity continuously diffusing downward to achieve the cooling maintenance function, which is suitable for scenarios where the indoor temperature needs to be maintained after decreasing to a certain level. The constant temperature mode has low air discharge volume and air speed, and the discharge airflow is blown obliquely downward in the third direction. This mode can both heat and cool, and is suitable for scenarios where the indoor temperature needs to be maintained after completely meeting user requirements. The dual-zone air supply mode has air discharge volume and air speed adjustable according to user needs, and the discharge airflow is blown out in two different directions. This mode can both heat and cool, and is suitable for scenarios requiring simultaneous temperature regulation at different positions in the room.

Specifically, a third included angle is formed between the third direction and the horizontal direction. The first included angle is greater than the third included angle, and the third included angle is greater than the second included angle, that is, the discharge airflow blown in the normal heating mode is lower than that blown in the constant temperature mode, and the discharge airflow blown in the constant temperature mode is lower than that blown in the cooling mode. For ease of understanding, the first included angle is denoted as a, the second included angle is denoted as b, and the third included angle is denoted as c.

When the indoor unit of air conditioner 100 operates in the zero-draft-sensation mode, the air-deflecting structure 140 moves to the first position, that is, both the first air deflector 141 and the second air deflector 142 rotate to the middle position. At this time, the concave surfaces of the first air deflector 141 and the second air deflector 142 are directly opposite to the outlet 161 to entrain and redirect the discharge airflow toward the airflow channel 150. Specifically, when the discharge airflow blown from the outlet 161 blows onto the concave surfaces of the first air deflector 141 and the second air deflector 142, part of the discharge airflow directly flows out through the second overflow holes 145 formed in the first air deflector 141 and the third overflow holes 146 formed in the second air deflector 142, implementing zero-draft-sensation air discharge in the region of the first air deflector 141 and the second air deflector 142, and the other part of the discharge airflow flows into the airflow channel 150 under the guidance of the concave surfaces of the first air deflector 141 and the second air deflector 142, and flows out through the first overflow holes 121 formed in the front panel 120, implementing zero-draft-sensation air discharge in the region of the front panel 120. In this way, the air volume of zero-draft-sensation air discharge can be effectively increased, and the heat exchange effect can be ensured.

When the indoor unit of air conditioner 100 operates in the enhanced heating mode, the air-deflecting structure 140 moves to the second position, that is, both the first air deflector 141 and the second air deflector 142 rotate to the left limit position. At this time, the convex surface of the first air deflector 141 is facing the airflow channel 150 to block the airflow channel 150 and prevent the discharge airflow from flowing into the airflow channel 150, while the convex surface of the second air deflector 142 is facing the first air deflector 141 to avoid guiding the discharge airflow to the region where the first air deflector 141 is located. Specifically, part of the discharge airflow blown from the outlet 161 flows downward after being bent along the concave surface of the first air deflector 141, and the other part flows downward after being bent along the concave surface of the second air deflector 142. During this process, a slight amount of discharge airflow may pass through the second overflow holes 145 formed in the first air deflector 141 and the third overflow holes 146 formed in the second air deflector 142, but these discharge airflows may be ignored because the air discharge direction is different from the opening directions of the second overflow holes 145 and the third overflow holes 146. In this way, the first air deflector 141 and the second air deflector 142 simultaneously play the role of guiding air, ensuring that the discharge airflow flows downward, improving the accuracy of air deflecting and enhancing the air-deflecting effect.

When the indoor unit of air conditioner 100 operates in the normal heating mode, the air-deflecting structure 140 moves to the third position, that is, both the first air deflector 141 and the second air deflector 142 rotate to the right limit position. At this time, the concave surface of the first air deflector 141 is facing the airflow channel 150, the concave surface of the second air deflector 142 is facing the first air deflector 141, and the convex surface of the first air deflector 141 and the concave surface of the second air deflector 142 jointly guide the discharge airflow. Specifically, the discharge airflow blown from the outlet 161 flows between the convex surface of the first air deflector 141 and the concave surface of the second air deflector 142. The convex surface of the first air deflector 141 and the concave surface of the second air deflector 142 jointly act to make the discharge airflow flow obliquely downward in the first direction. During this process, a slight amount of discharge airflow may pass through the second overflow holes 145 formed in the first air deflector 141 and the third overflow holes 146 formed in the second air deflector 142, but these discharge airflows may be ignored because the air discharge direction is different from the opening directions of the second overflow holes 145 and the third overflow holes 146. In this way, the first air deflector 141 and the second air deflector 142 simultaneously play the role of guiding air, ensuring that the discharge airflow flows obliquely downward in the first direction, improving the accuracy of air deflecting, and enhancing the air-deflecting effect.

When the indoor unit of air conditioner 100 operates in the cooling mode, the air-deflecting structure 140 moves to the fourth position, that is, both the first air deflector 141 and the second air deflector 142 rotate to a position between the middle position and the right limit position. At this time, the concave surfaces of the first air deflector 141 and the second air deflector 142 are both set upward, and the concave surface of the first air deflector 141, the convex surface of the first air deflector 141, and the concave surface of the second air deflector 142 jointly guide the discharge airflow. Specifically, part of the discharge airflow blown from the outlet 161 flows obliquely downward in the second direction along with the concave surface of the first air deflector 141, and the other part flows between the convex surface of the first air deflector 141 and the concave surface of the second air deflector 142. The convex surface of the first air deflector 141 and the concave surface of the second air deflector 142 jointly act to make the discharge airflow flow obliquely downward in the second direction. During this process, a slight amount of discharge airflow may pass through the second overflow holes 145 formed in the first air deflector 141 and the third overflow holes 146 formed in the second air deflector 142, but these discharge airflows may be ignored because the air discharge direction is different from the opening directions of the second overflow holes 145 and the third overflow holes 146. In this way, the first air deflector 141 and the second air deflector 142 simultaneously play the role of guiding air, ensuring that the discharge airflow flows obliquely downward in the second direction, improving the accuracy of air deflecting and enhancing the air-deflecting effect.

When the indoor unit of air conditioner 100 operates in the constant temperature mode, the air-deflecting structure 140 moves to the fifth position, that is, both the first air deflector 141 and the second air deflector 142 rotate to a position between the middle position and the right limit position. At this time, the concave surfaces of the first air deflector 141 and the second air deflector 142 are both set obliquely upward, and the concave surface of the first air deflector 141, the convex surface of the first air deflector 141, and the concave surface of the second air deflector 142 jointly guide the discharge airflow. Specifically, part of the discharge airflow blown from the outlet 161 flows obliquely downward in the third direction along with the concave surface of the first air deflector 141, and the other part flows between the convex surface of the first air deflector 141 and the concave surface of the second air deflector 142. The convex surface of the first air deflector 141 and the concave surface of the second air deflector 142 jointly act to make the discharge airflow flow obliquely downward in the third direction. During this process, a slight amount of discharge airflow may pass through the second overflow holes 145 formed in the first air deflector 141 and the third overflow holes 146 formed in the second air deflector 142, but these discharge airflows may be ignored because the air discharge direction is different from the opening directions of the second overflow holes 145 and the third overflow holes 146. In this way, the first air deflector 141 and the second air deflector 142 simultaneously play the role of guiding air, ensuring that the discharge airflow flows obliquely downward in the third direction, improving the accuracy of air deflecting and enhancing the air-deflecting effect.

When the indoor unit of air conditioner 100 operates in the dual-zone air supply mode, the air-deflecting structure 140 moves to the sixth position. The first air deflector 141 rotates to the right limit position, and the second air deflector 142 rotates to the left limit position. At this time, the convex surfaces of the first air deflector 141 and the second air deflector 142 are opposite to each other, and the convex surface of the first air deflector 141, the concave surface of the second air deflector 142, and the convex surface of the second air deflector 142 jointly guide the discharge airflow. Specifically, part of the discharge airflow blown from the outlet 161 flows in one direction along with the concave surface of the second air deflector 142, and the other part flows between the convex surface of the first air deflector 141 and the convex surface of the second air deflector 142. The convex surface of the first air deflector 141 and the convex surface of the second air deflector 142 jointly act to make the discharge airflow flow in another direction, and the two directions are completely different. During this process, a slight amount of discharge airflow may pass through the second overflow holes 145 formed in the first air deflector 141 and the third overflow holes 146 formed in the second air deflector 142, but these discharge airflows may be ignored because the air discharge direction is different from the opening directions of the second overflow holes 145 and the third overflow holes 146. In this way, the first air deflector 141 and the second air deflector 142 simultaneously play the role of guiding air, so that the discharge airflow can be blown out from two different directions at the same time, improving the accuracy of air deflecting and enhancing the air-deflecting effect.

In the indoor unit of air conditioner 100 according to the embodiment of the present invention, the front panel 120 is installed on the outer side of the middle frame 110, an airflow channel 150 is formed between the front panel 120 and the middle frame 110, the front panel 120 is densely provided with a plurality of first overflow holes 121, the first overflow holes 121 are communicated with the airflow channel 150, a volute air duct 160 with an outlet 161 is arranged in the middle frame 110, the outlet 161 is configured for the discharge airflow to be blown out, and the air-deflecting structure 140 is movably installed outside the outlet 161. When the indoor unit of air conditioner 100 operates in the zero-draft-sensation mode, the air-deflecting structure 140 moves to the first position to guide the discharge airflow into the airflow channel 150, so that the discharge airflow is blown out through the first overflow holes 121. When the indoor unit of air conditioner 100 operates in the enhanced heating mode, the air-deflecting structure 140 moves to the second position to make the discharge airflow blow in the downward direction. When the indoor unit of air conditioner 100 operates in the normal heating mode, the air-deflecting structure 140 moves to the third position to make the discharge airflow blow obliquely downward in the first direction, and a first included angle is formed between the first direction and the horizontal direction. When the indoor unit of air conditioner 100 operates in the cooling mode, the air-deflecting structure 140 moves to the fourth position to make the discharge airflow blow obliquely downward in the second direction, and a second included angle is formed between the second direction and the horizontal direction. The first included angle is greater than the second included angle. Compared with the prior art, the indoor unit of air conditioner 100 provided by the present invention adopts the airflow channel 150 arranged between the front panel 120 and the middle frame 110 and the air-deflecting structure 140 movably installed on the mounting frame 130, so that different air discharge modes can be implemented, the diversity of air discharge modes is improved, various needs of users are met, the air-deflecting effect is enhanced, and the user experience is better.

Although the present invention is disclosed as above, it is still not limited thereto. Any person skilled in the art may make various changes and modifications without departing from the scope of the present invention as defined by the claims.

## Claims

1. An indoor unit of air conditioner (100), comprising a middle frame (110), a front panel (120), and an air-deflecting structure (140), wherein the front panel (120) is installed on an outer side of the middle frame (110), an airflow channel (150) is formed between the front panel (120) and the middle frame (110), the front panel (120) is densely provided with a plurality of first overflow holes (121), the first overflow holes (121) are communicated with the airflow channel (150), a volute air duct (160) with an outlet (161) is arranged in the middle frame (110), the outlet (161) is configured for discharge airflow to be blown out, and the air-deflecting structure (140) is movably installed outside the outlet (161);
when the indoor unit of air conditioner operates in a zero-draft-sensation mode, the air-deflecting structure (140) is configured to move to a first position to guide the discharge airflow into the airflow channel (150), so that the discharge airflow is blown out through the first overflow holes (121);
when the indoor unit of air conditioner operates in an enhanced heating mode, the air-deflecting structure (140) is configured to move to a second position to make the discharge airflow blow in a downward direction;
when the indoor unit of air conditioner operates in a normal heating mode, the air-deflecting structure (140) is configured to move to a third position to make the discharge airflow blow obliquely downward in a first direction, and a first included angle is formed between the first direction and a horizontal direction; and
when the indoor unit of air conditioner operates in a cooling mode, the air-deflecting structure (140) is configured to move to a fourth position to make the discharge airflow blow obliquely downward in a second direction, and a second included angle is formed between the second direction and the horizontal direction, wherein
the first included angle is greater than the second included angle;
**characterised in that**
the indoor unit of air conditioner further comprises a mounting frame (130) detachably connected to the middle frame (110), and the air-deflecting structure (140) comprises a first air deflector (141) and a second air deflector (142), both the first air deflector (141) and the second air deflector (142) are rotatably installed on the mounting frame (130), the first air deflector (141) has a first rotation axis, the second air deflector (142) has a second rotation axis, and the first rotation axis and the second rotation axis are arranged in parallel and spaced apart;
and
wherein a preset included angle is formed between a direction of a connecting line of the first rotation axis and the second rotation axis and the horizontal direction, and the preset included angle ranges from 30 degrees to 40 degrees.

2. The indoor unit of air conditioner according to claim 1, wherein a ratio of the first included angle to the second included angle ranges from 3 to 5.

3. The indoor unit of air conditioner according to claim 1, wherein the mounting frame (130) is provided with a first limit table (131) and a second limit table (132) spaced apart, the first limit table (131) is configured to abut against the first air deflector (141) when the air-deflecting structure (140) moves to the second position, and the second limit table (132) is configured to abut against the second air deflector (142) when the air-deflecting structure (140) moves to the second position.

4. The indoor unit of air conditioner according to claim 1, wherein the first air deflector (141) is densely provided with a plurality of second overflow holes (145), the second air deflector (142) is densely provided with a plurality of third overflow holes (146), and the second overflow holes (145) and the third overflow holes (146) are configured for the discharge airflow to be blown out.

5. The indoor unit of air conditioner according to claim 1, wherein cross sections of both the first air deflector (141) and the second air deflector (142) are arc shaped.

6. The indoor unit of air conditioner according to claim 1, wherein the air-deflecting structure (140) further comprises a first stepping motor (143) and a second stepping motor (144), both the first stepping motor (143) and the second stepping motor (144) are installed on the middle frame (110), the first stepping motor (143) is in transmission connection with the first air deflector (141), and the second stepping motor (144) is in transmission connection with the second air deflector (142).

7. The indoor unit of air conditioner according to claim 1, wherein when the indoor unit of air conditioner (100) operates in a constant temperature mode, the air-deflecting structure (140) is configured to move to a fifth position, wherein both the first air deflector (141) and the second air deflector (142) rotate to a position between a middle position and a right limit position.

8. The indoor unit of air conditioner according to claim 1, wherein when the indoor unit of air conditioner (100) operates in a dual-zone air supply mode, the air-deflecting structure (140) is configured to move to a sixth position, the first air deflector (141) rotates to a right limit position, and the second air deflector (142) rotates to a left limit position.

## Patentansprüche

1. Innenraumeinheit der Klimaanlage (100), umfassend einen Mittelrahmen (110), eine Frontplatte (120) und eine Luftleitstruktur (140), wobei die Frontplatte (120) an einer Außenseite des Mittelrahmens (110) angebracht ist, ein Luftstromkanal (150) zwischen der Frontplatte (120) und dem Mittelrahmen (110) gebildet wird, die Frontplatte (120) dicht mit einer Vielzahl von ersten Überlauföffnungen (121) versehen ist, die ersten Überlauföffnungen (121) mit dem Luftstromkanal (150) in Verbindung stehen, ein spiralförmiger Luftkanal (160) mit einem Auslass (161) im Mittelrahmen (110) angeordnet ist, der Auslass (161) dazu ausgelegt ist, den Abluftstrom nach außen abzuführen und die Luftleitstruktur (140) beweglich außerhalb des Auslasses (161) angebracht ist;
wenn die Innenraumeinheit der Klimaanlage im Null-Zugluft-Modus arbeitet, ist die Luftleitstruktur (140) dazu ausgelegt, sich in eine erste Position zu bewegen, um den Abluftstrom in den Luftkanal (150) zu leiten, so dass der Abluftstrom über die ersten Überlauföffnungen (121) ausgeblasen wird;
wenn die Innenraumeinheit der Klimaanlage im verstärkten Heizmodus arbeitet, ist die Luftleitstruktur (140) dazu ausgelegt, sich in eine zweite Position zu bewegen, um den Abluftstrom nach unten zu richten;
wenn die Innenraumeinheit der Klimaanlage im normalen Heizmodus arbeitet, ist die Luftleitstruktur (140) dazu ausgelegt, sich in eine dritte Position zu bewegen, um den Abluftstrom schräg nach unten in eine erste Richtung zu leiten, wobei sich zwischen der ersten Richtung und einer horizontalen Richtung ein erster eingeschlossener Winkel bildet; und
wenn die Innenraumeinheit der Klimaanlage im Kühlmodus arbeitet, ist die Luftleitstruktur (140) dazu ausgelegt, sich in eine vierte Position zu bewegen, um den Abluftstrom schräg nach unten in eine zweite Richtung zu leiten, wobei sich zwischen der zweiten Richtung und der horizontalen Richtung ein zweiter eingeschlossener Winkel bildet, wobei
der erste eingeschlossene Winkel größer als der zweite eingeschlossene Winkel ist;
**dadurch gekennzeichnet, dass** die Innenraumeinheit der Klimaanlage außerdem einen Montagerahmen (130) umfasst, der lösbar mit dem Mittelrahmen (110) verbunden ist, und die Luftleitstruktur (140) ein erstes Luftleitblech (141) und ein zweites Luftleitblech (142) umfasst, wobei sowohl das erste Luftleitblech (141) als auch das zweite Luftleitblech (142) drehbar am Montagerahmen (130) angebracht sind, das erste Luftleitblech (141) eine erste Drehachse und das zweite Luftleitblech (142) eine zweite Drehachse aufweist und die erste Drehachse und die zweite Drehachse parallel und im Abstand zueinander angeordnet sind;
und wobei zwischen einer Richtung einer Verbindungslinie der ersten Drehachse und der zweiten Drehachse und der horizontalen Richtung ein voreingestellter eingeschlossener Winkel gebildet wird und der voreingestellte eingeschlossene Winkel im Bereich von 30 Grad bis 40 Grad liegt.

2. Innenraumeinheit der Klimaanlage nach Anspruch 1, wobei das Verhältnis des ersten eingeschlossenen Winkels zum zweiten eingeschlossenen Winkel zwischen 3 und 5 liegt.

3. Innenraumeinheit der Klimaanlage nach Anspruch 1, wobei der Montagerahmen (130) mit einem ersten Begrenzungsvorsprung (131) und einem zweiten Begrenzungsvorsprung (132) im Abstand zueinander versehen ist, wobei der erste Begrenzungsvorsprung (131) dazu ausgelegt ist, an dem ersten Luftleitblech (141) anzuliegen, wenn sich die Luftleitstruktur (140) in die zweite Position bewegt, und der zweite Begrenzungsvorsprung (132) dazu ausgelegt ist, an dem zweiten Luftleitblech (142) anzuliegen, wenn sich die Luftleitstruktur (140) in die zweite Position bewegt.

4. Innenraumeinheit der Klimaanlage nach Anspruch 1, wobei das erste Luftleitblech (141) dicht mit einer Vielzahl von zweiten Überlauföffnungen (145) versehen ist, das zweite Luftleitblech (142) dicht mit einer Vielzahl von dritten Überlauföffnungen (146) versehen ist und die zweiten Überlauföffnungen (145) und die dritten Überlauföffnungen (146) dazu ausgelegt sind, den Abluftstrom auszublasen.

5. Innenraumeinheit der Klimaanlage nach Anspruch 1, wobei die Querschnitte sowohl des ersten Luftleitblechs (141) als auch des zweiten Luftleitblechs (142) bogenförmig sind.

6. Innenraumeinheit der Klimaanlage nach Anspruch 1, wobei die Luftleitstruktur (140) außerdem einen ersten Schrittmotor (143) und einen zweiten Schrittmotor (144) umfasst, wobei sowohl der erste Schrittmotor (143) als auch der zweite Schrittmotor (144) auf dem Mittelrahmen (110) montiert sind, der erste Schrittmotor (143) in Übertragungsverbindung mit dem ersten Luftleitblech (141) steht und der zweite Schrittmotor (144) in Übertragungsverbindung mit dem zweiten Luftleitblech (142) steht.

7. Innenraumeinheit der Klimaanlage nach Anspruch 1, wobei, wenn die Innenraumeinheit der Klimaanlage (100) im Konstanttemperaturmodus arbeitet, die Luftleitstruktur (140) dazu ausgelegt ist, sich in eine fünfte Position zu bewegen, wobei sich sowohl das erste Luftleitblech (141) als auch das zweite Luftleitblech (142) in eine Position zwischen einer Mittelposition und einer rechten Endposition drehen.

8. Innenraumeinheit der Klimaanlage nach Anspruch 1, wobei, wenn die Innenraumeinheit der Klimaanlage (100) in einem Zweizonen-Luftzufuhrmodus arbeitet, die Luftleitstruktur (140) dazu ausgelegt ist, sich in eine sechste Position zu bewegen und das erste Luftleitblech (141) sich in eine rechte Endposition und das zweite Luftleitblech (142) sich in eine linke Endposition dreht.

## Revendications

1. Unité intérieure de climatiseur (100), comprenant un châssis central (110), un panneau avant (120) et une structure de déviation d'air (140), dans laquelle le panneau avant (120) est installé sur un côté externe du châssis central (110), un canal de circulation d'air (150) est formé entre le panneau avant (120) et le châssis central (110), le panneau avant (120) est pourvu de manière dense d'une pluralité de premiers orifices de diffusion (121), les premiers orifices de diffusion (121) communiquent avec le canal de circulation d'air (150), un conduit d'air en volute (160) doté d'une sortie (161) est disposé dans le châssis central (110), la sortie (161) est configurée pour qu'un flux d'air de refoulement soit soufflé vers l'extérieur, et la structure de déviation d'air (140) est installée de manière mobile à l'extérieur de la sortie (161) ;
lorsque l'unité intérieure de climatiseur fonctionne dans un mode « sans sensation de courant d'air », la structure de déviation d'air (140) est configurée pour se déplacer vers une première position afin de guider le flux d'air de refoulement dans le canal de circulation d'air (150), de sorte que le flux d'air de refoulement soit soufflé à travers les premiers orifices de diffusion (121) ;
lorsque l'unité intérieure de climatiseur fonctionne dans un mode de chauffage amélioré, la structure de déviation d'air (140) est configurée pour se déplacer vers une deuxième position pour amener le flux d'air de refoulement à souffler dans une direction vers le bas ;
lorsque l'unité intérieure de climatiseur fonctionne dans un mode de chauffage normal, la structure de déviation d'air (140) est configurée pour se déplacer vers une troisième position pour amener le flux d'air de refoulement à souffler obliquement vers le bas dans une première direction, et un premier angle inclus est formé entre la première direction et une direction horizontale ; et
lorsque l'unité intérieure de climatiseur fonctionne dans un mode de refroidissement, la structure de déviation d'air (140) est configurée pour se déplacer vers une quatrième position pour amener le flux d'air de refoulement à souffler obliquement vers le bas dans une deuxième direction, et un deuxième angle inclus est formé entre la deuxième direction et la direction horizontale, dans laquelle
le premier angle inclus est supérieur au deuxième angle inclus ;
**caractérisée en ce que** l'unité intérieure de climatiseur comprend en outre un cadre de montage (130) relié de manière amovible au châssis central (110), et la structure de déviation d'air (140) comprend un premier déflecteur d'air (141) et un deuxième déflecteur d'air (142), le premier déflecteur d'air (141) et le deuxième déflecteur d'air (142) étant tous deux installés de manière rotative sur le cadre de montage (130), le premier déflecteur d'air (141) présentant un premier axe de rotation, le deuxième déflecteur d'air (142) présentant un deuxième axe de rotation, et le premier axe de rotation et le deuxième axe de rotation étant disposés parallèlement et espacés l'un de l'autre ;
et dans laquelle un angle inclus prédéfini est formé entre une direction d'une ligne de liaison du premier axe de rotation et du deuxième axe de rotation et la direction horizontale, et l'angle inclus prédéfini est compris dans la plage allant de 30 degrés à 40 degrés.

2. Unité intérieure de climatiseur selon la revendication 1, dans laquelle un rapport du premier angle inclus sur le deuxième angle inclus est compris dans la plage allant de 3 à 5.

3. Unité intérieure de climatiseur selon la revendication 1, dans laquelle le cadre de montage (130) est pourvu d'une première plaque de butée (131) et d'une deuxième plaque de butée (132) espacées l'une de l'autre, la première plaque de butée (131) étant configurée pour venir en butée contre le premier déflecteur d'air (141) lorsque la structure de déviation d'air (140) se déplace vers la deuxième position, et la deuxième plaque de butée (132) étant configurée pour venir en butée contre le deuxième déflecteur d'air (142) lorsque la structure de déviation d'air (140) se déplace vers la deuxième position.

4. Unité intérieure de climatiseur selon la revendication 1, dans laquelle le premier déflecteur d'air (141) est pourvu de manière dense d'une pluralité de deuxièmes orifices de diffusion (145), le deuxième déflecteur d'air (142) est pourvu de manière dense d'une pluralité de troisièmes orifices de diffusion (146), et les deuxièmes orifices de diffusion (145) ainsi que les troisièmes orifices de diffusion (146) sont configurés pour que le flux d'air de refoulement soit soufflé vers l'extérieur.

5. Unité intérieure de climatiseur selon la revendication 1, dans laquelle les sections transversales du premier déflecteur d'air (141) et du deuxième déflecteur d'air (142) sont toutes deux en forme d'arc.

6. Unité intérieure de climatiseur selon la revendication 1, dans laquelle la structure de déviation d'air (140) comprend en outre un premier moteur pas-à-pas (143) et un deuxième moteur pas-à-pas (144), le premier moteur pas-à-pas (143) et le deuxième moteur pas-à-pas (144) étant tous deux installés sur le châssis central (110), le premier moteur pas-à-pas (143) étant en liaison de transmission avec le premier déflecteur d'air (141), et le deuxième moteur pas-à-pas (144) étant en liaison de transmission avec le deuxième déflecteur d'air (142).

7. Unité intérieure de climatiseur selon la revendication 1, dans laquelle, lorsque l'unité intérieure de climatiseur (100) fonctionne dans un mode de température constante, la structure de déviation d'air (140) est configurée pour se déplacer vers une cinquième position, dans laquelle le premier déflecteur d'air (141) et le deuxième déflecteur d'air (142) tournent tous deux vers une position située entre une position médiane et une position limite droite.

8. Unité intérieure de climatiseur selon la revendication 1, dans laquelle, lorsque l'unité intérieure de climatiseur (100) fonctionne dans un mode de distribution d'air à deux zones, la structure de déviation d'air (140) est configurée pour se déplacer vers une sixième position, le premier déflecteur d'air (141) tournant vers une position limite droite, et le deuxième déflecteur d'air (142) tournant vers une position limite gauche.
